# EUROPÄISCHE PATENTANMELDUNG

(11) **EP 4 474 897 A1**
(43) Veröffentlichungstag der Anmeldung: **11.12.2024**
(21) Anmeldenummer: 23178048.7
(22) Anmeldetag: 07.06.2023
(51) Int. Cl.: G02F 1/355

(54) **VERFAHREN UND VORRICHTUNG ZUM POLEN EINES FERROELEKTRISCHEN MEDIUMS**

(71) Anmelder: Fraunhofer-Gesellschaft zur Förderung der angewandten Forschung e.V., 80686 München (DE)
(72) Erfinder: KIESSLING, Jens, 79110 Freiburg (DE); HERR, Simon J., 79110 Freiburg (DE)
(74) Vertreter: WSL Patentanwälte Partnerschaft mbB

(57) **Zusammenfassung**

Ein Verfahren zum Polarisieren eines ferroelektrischen Mediums (2) mit gegenüberliegend angeordneten Seitenflächen (11, 15) und Volumensegmenten (4, 5) mit unterschiedlicher Orientierung der spontanen Polarisation umfasst Schritte zum Aufbringen einer ersten Kontaktfläche (13) eines ersten elektrischen Kontakts (14) auf einen ersten Seitenflächenabschnitt (16), Aufbringen einer zweiten Kontaktfläche (9) eines zweiten elektrischen Kontakts (8) auf einen zweiten Seitenflächenabschnitt (12), Anlegen einer elektrischen Spannung zwischen den Kontakten und Ausführen einer Relativbewegung zwischen dem ferroelektrischen Medium (2) und zumindest der ersten Kontaktfläche (13), so dass diese den ersten Seitenflächenabschnitt (16) überstreicht, wobei die zweite Kontaktfläche (9) höchstens so groß wie der zweite Seitenflächenabschnitt (12) ist. Eine entsprechende Vorrichtung zum Polarisieren wird ebenfalls offenbart.

## Beschreibung

Die vorliegende Erfindung betrifft ein Verfahren zum Polen eines ferroelektrischen Mediums mit einer ersten Seitenfläche und einer der ersten Seitenfläche gegenüber angeordneten zweiten Seitenfläche, so dass das ferroelektrische Medium ein erstes Volumensegment und ein zweites Volumensegment aufweist, wobei die spontane Polarisierung des ferroelektrischen Mediums in dem ersten Volumensegment eine erste Orientierung und in dem zweiten Volumensegment eine zweite Orientierung aufweist, wobei die erste Orientierung und die zweite Orientierung voneinander verschieden sind und wobei das erste Volumensegment durch einen ersten Seitenflächenabschnitt der ersten Seitenfläche und einem zweiten Seitenflächenabschnitt der zweiten Seitenfläche definiert ist und wobei das Verfahren die Schritte aufweist: Bereitstellen des ferroelektrischen Mediums, Aufbringen einer ersten Kontaktfläche eines ersten elektrischen Kontakts auf den ersten Seitenflächenabschnitt, wobei die erste Kontaktfläche kleiner ist als der erste Seitenflächenabschnitt, Aufbringen einer zweiten Kontaktfläche eines zweiten elektrischen Kontakts auf den zweiten Seitenflächenabschnitt, Anlegen einer elektrischen Spannung zwischen dem ersten elektrischen Kontakt und dem zweiten elektrischen Kontakt und Ausführen einer Relativbewegung zwischen der ersten Kontaktfläche und dem ferroelektrischen Medium, so dass die erste Kontaktfläche den ersten Seitenflächenabschnitt überstreicht.

Darüber hinaus betrifft die vorliegende Erfindung eine Vorrichtung zum Polen eines ferroelektrischen Mediums mit einer ersten Seitenfläche und einer der ersten Seitenfläche gegenüber angeordneten zweiten Seitenfläche, so dass das ferroelektrische Medium ein erstes Volumensegment und ein zweites Volumensegment aufweist, wobei die Vorrichtung aufweist: einen Halter zum Aufnehmen des ferroelektrischen Mediums in einem Betrieb der Vorrichtung, einen ersten elektrischen Kontakt mit einer ersten Kontaktfläche, wobei der erste elektrische Kontakt derart ausgestaltet und angeordnet ist, dass die erste Kontaktfläche in dem Betrieb der Vorrichtung auf einen ersten Seitenflächenabschnitt des an dem Halter aufgenommenen ferroelektrischen Mediums aufbringbar ist, einen zweiten elektrischen Kontakt mit einer zweiten Kontaktfläche, wobei der zweite elektrische Kontakt derart ausgestaltet und angeordnet ist, dass die zweite Kontaktfläche in den Betrieb der Vorrichtung auf einen zweiten Seitenflächenabschnitt des an dem Halter aufgenommenen ferroelektrischen Mediums aufbringbar ist, eine elektrische Spannungsquelle, wobei die Spannungsquelle derart mit dem ersten und dem zweiten elektrischen Kontakt verbunden ist, dass in dem Betrieb der Vorrichtung eine elektrische Spannung zwischen den ersten und zweiten Kontaktflächen anlegbar ist, einen Aktor, wobei der Aktor derart ausgestaltet und angeordnet ist, dass der Aktor in dem Betrieb der Vorrichtung eine Relativbewegung zwischen der ersten Kontaktfläche und dem Halter bewirkt, und eine Steuerung, wobei die Steuerung derart wirksam mit dem Aktor verbunden ist, dass in dem Betrieb der Vorrichtung der Aktor ein Steuersignal von der Steuerung empfängt und wobei die Steuerung derart eingerichtet ist, dass die Steuerung in dem Betrieb der Vorrichtung den Aktor derart steuert, dass die erste Kontaktfläche den ersten Seitenflächenabschnitt des in dem Halter aufgenommenen ferroelektrischen Mediums überstreicht.

Ferroelektrische Medien, insbesondere ferroelektrische Kristalle zeigen in der Regel eine hohe Nichtlinearität bei der Wechselwirkung mit elektromagnetischen Feldern. Ferroelektrische Medien weisen zudem den Vorteil auf, dass sie sich abschnittsweise polen bzw. ausgehend von einer vorgegebenen homogenen Polung des Mediums abschnittsweise umpolen lassen.

Diese Möglichkeit zur abschnittsweisen Ausbildung von Domänen oder Volumensegmenten mit voneinander verschiedener, vorzugsweise entgegengesetzter, Orientierung ihrer spontanen Polarisierung macht ferroelektrische Medien zur Quasi-Phasenanpassung geeignet. Bei nichtlinearen optischen Prozessen werden ein oder mehrere elektromagnetische Felder durch ein Ausbreitungsmedium mit nichtlinearer Suszeptibilität geleitet, um ein oder mehrere neue elektromagnetische Felder mit einer anderen Frequenz zu erzeugen. Damit dies effizient gelingen kann, müssen die generierten Elementarwellen in Phase sein, d.h. eine feste Beziehung zwischen ihren Oszillationen aufweisen. Nur dann tritt keine destruktive Interferenz auf und die Effizienz der Umwandlung bleibt hoch. Auch in Medien, die diese Phasenanpassungsbedingung nicht erfüllen, ist es möglich, eine destruktive Interferenz wirksam zu vermeiden, indem die Orientierung der spontanen Polarisierung in verschiedenen Abschnitten des nichtlinearen Mediums verschieden ausgerichtet oder umgekehrt wird. Die Phasen der erzeugten Elementarwellen aus einem umgepolten Volumensegment erfahren einen Phasensprung gegenüber erzeugten Elementarwellen aus einem nicht umgepolten Volumensegment. So ist ein konstruktives Aufsummieren der elektromagnetischen Felder auch über lange Ausbreitungsstrecken möglich.

Zum Polen bzw. Umpolen von ferroelektrischen Medien sind aus dem Stand der Technik eine Reihe von Verfahren bekannt. Alle setzen voraus, dass ein ferroelektrisches Medium mit einer über die Länge des Mediums hinweg uniformen Orientierung der spontanen Polarisierung bereitgestellt wird. Dann werden einzelne Volumensegmente gepolt oder umgepolt, so dass sie eine von der zunächst vorgegebenen Orientierung abweichende Orientierung der spontanen Polarisierung aufweisen.

Dabei ist es zunehmend das Ziel, komplexere Polungsstrukturen in ferroelektrischen Materialien zu realisieren. Solche komplexeren Strukturen sind mit konventionellen Verfahren zum Polen, wie bspw. dem Polen mithilfe von Masken, die auf gegenüberliegende erste und zweite Seitenflächen des jeweiligen Mediums aufgebracht werden, nicht realisierbar.

Als gut geeignet zum Bereitstellen von komplexen räumlichen Polungsstrukturen in ferroelektrischen Medien hat sich jedoch das sogenannte kalligraphische Polen erwiesen. Dabei wird eine zweite Seitenfläche des ferroelektrischen Mediums vollständig mit einer planaren Elektrode versehen, während auf der ersten, gegenüberliegenden Seitenfläche die Kontaktfläche eines ersten elektrischen Kontakts so bewegt wird, dass sie seriell die einzelnen Flächenabschnitte, welche die umzupolenden Volumensegmente begrenzen, überstreicht. Die Polungsstruktur wird damit gewissermaßen in das ferroelektrische Medium geschrieben. Dieses aus dem Stand der Technik bekannte kalligraphische Polen führt bei dünnen ferroelektrischen Medien zu guten Ergebnissen, versagt aber beim Polen von dicken ferroelektrischen Medien.

Demgegenüber ist es Aufgabe der vorliegenden Erfindung, ein Verfahren und eine Vorrichtung zum Polen eines ferroelektrischen Mediums bereitzustellen, die auch für dicke Kristalle geeignet sind und es gleichzeitig ermöglichen, komplexe Polungsstrukturen bereitzustellen.

Die zuvor genannte Aufgabe wird durch ein Verfahren zum Polen eines ferroelektrischen Mediums gemäß dem beigefügten unabhängigen Anspruch 1 gelöst. Dazu ist bei dem Verfahren der eingangs genannten Art die zweite Kontaktfläche höchstens so groß wie der zweite Seitenflächenabschnitt.

Es ist die grundlegende Idee der vorliegenden Erfindung, die zweite Kontaktfläche des zweiten elektrischen Kontakts maximal so groß auszubilden wie den zweiten Seitenflächenabschnitt, welcher das Volumen des ersten Volumensegments auf der zweiten Seitenfläche des ferroelektrischen Mediums begrenzt.

Im Gegensatz zu einem Kontakt aus dem Stand der Technik auf der zweiten Seitenfläche des ferroelektrischen Mediums, welcher die gesamte zweite Seitenfläche bedeckt, wird ein räumlich auf maximal den zweiten Seitenflächenabschnitt des ersten Volumensegments beschränkter zweiter Kontakt eingesetzt.

Durch diese Begrenzung der zweiten Kontaktfläche erfährt das elektrische Feld, welches zwischen den ersten und zweiten Kontaktflächen das ferroelektrische Medium durchsetzt eine starke Eingrenzung in eine Richtung parallel zu der zweiten Kontaktfläche. Diese Eingrenzung des elektrischen Felds wiederum führt dazu, dass sich beim Durchwachsen der Domäne durch das erste Volumensegment nicht die kristalleigene Anisotropie beim Domänenwachstum durchsetzt. Damit bleibt die von der ersten Kontaktfläche vorgegebene Domänen- oder Volumensegmentstruktur beim Durchwachsen über die ganze Dicke hinweg auch bei dicken Medien erhalten.

Im Sinne der vorliegenden Anmeldung wird als Länge des ferroelektrischen Mediums bzw. eines Volumensegments seine Erstreckung in der gewünschten Ausbreitungsrichtung der elektromagnetischen Strahlung in dem ferroelektrischen Medium bezeichnet. Diese Ausbreitungsrichtung wird auch als Längenrichtung bezeichnet. Die Dicke bezeichnet die Erstreckung des ferroelektrischen Mediums in einer Dickenrichtung, wobei die Dickenrichtung senkrecht zu der Längenrichtung und senkrecht zu der zweiten Kontaktfläche ist. Die Dickenrichtung fällt typischerweise mit der Orientierung der spontanen Polarisierung zusammen. Die Breite des Kristalls ist seine Erstreckung in einer Breitenrichtung senkrecht zu der Längenrichtung und senkrecht zu der Dickenrichtung.

In einer Ausführungsform hat ein solches ferroelektrisches Medium eine Dicke senkrecht zu der zweiten Kontaktfläche von 500 µm oder mehr.

Das serielle "Schreiben" des ersten Seitenflächenabschnitts auf der ersten Seitenfläche des ersten Volumensegments ermöglicht zudem die Ausgestaltung von komplexen Polungsstrukturen. Ein Beispiel für eine solche komplexe Polungsstruktur ist ein gepoltes ferroelektrisches Medium mit einer über die Breite des Mediums variierenden Polungsperiode.

In einer Ausführungsform der Erfindung sind die Oberflächennormalen der ersten und zweiten Seitenflächen des ferroelektrischen Mediums parallel zueinander, zeigen aber voneinander weg.

Es versteht sich, dass der zweite Seitenflächenabschnitt, welcher das erste Volumensegment auf der zweiten Seitenfläche begrenzt, kleiner ist als die zweite Seitenfläche.

Ferroelektrische Medien im Sinne der vorliegenden Anmeldung umfassen insbesondere ferroelektrische, nichtlinear-optische Kristalle, bspw. aus Lithiumniobat, Lithiumtantalat, Kaliumtitanylphosphat oder Bariummagnesiumfluorid.

Die ersten und zweiten Volumensegmente des ferroelektrischen Mediums werden häufig auch als Domänen des Mediums bzw. des Kristalls bezeichnet. Dabei bezeichnet eine Domäne des ferroelektrischen Mediums ein zusammenhängendes Volumensegment des Kristalls, in dem die spontane Polarisierung des ferroelektrischen Mediums die gleiche Orientierung aufweist. Die ersten und zweiten Seitenflächenabschnitte des ersten Volumensegments auf den gegenüberliegenden ersten und zweiten Seitenflächen des ferroelektrischen Mediums definieren das Volumensegment, d.h. sie begrenzen sein Volumen.

Um das Domänenwachstum anzuregen, wird eine elektrische Spannung zwischen den beiden Kontaktflächen angelegt. Die Polarität der Spannung richtet sich nach der Orientierung des Mediums und das Spannungsniveau richtet sich nach der Dicke und nach der Koerzitivfeldstärke des zu polenden ferroelektrischen Mediums. Es kann sowohl eine konstante als auch eine zeitlich variierende, gepulste Spannung angelegt werden. In einer Ausführungsform der Erfindung beträgt die Spannung 1000 Volt oder mehr. In einer Ausführungsform wird die angelegte Spannung zudem auf den sogenannten Polstrom geregelt, d.h. auf denjenigen Strom, der zwischen der ersten Kontaktfläche und der zweiten Kontaktfläche durch das ferroelektrische Medium fließt.

Ein Aufbringen der ersten oder zweiten Kontaktfläche auf den jeweiligen ersten oder zweiten Seitenflächenabschnitt umfasst ein mechanisches in Kontaktbringen der jeweiligen Kontaktfläche mit dem Seitenflächenabschnitt, so dass sich beim Anlegen einer elektrischen Spannung zwischen dem ersten elektrischen Kontakt und dem zweiten elektrischen Kontakt ein elektrisches Feld zwischen der ersten Kontaktfläche und der zweiten Kontaktfläche erstreckt.

Da zwischen dem ferroelektrischen Medium und der ersten Kontaktfläche erfindungsgemäß eine Relativbewegung ausgeführt wird, schließt das Aufbringen der ersten Kontaktfläche auf den ersten Seitenflächenabschnitt eine stoffschlüssige Verbindung zwischen der ersten Kontaktfläche und dem ersten Seitenflächenabschnitt aus.

Anders ist dies für die zweite Kontaktfläche, die zumindest in einer Ausführungsform der Erfindung keine Relativbewegung gegenüber dem ferroelektrischen Medium ausführt. Daher ist in einer Ausführungsform der zweite elektrische Kontakt mit der zweiten Kontaktfläche auf dem zweiten Seitenflächenabschnitt stoffschlüssig abgeschieden. In einer alternativen Ausführungsform ist der zweite elektrische Kontakt eine Flüssigelektrode. Dazu werden der oder die Seitenflächenabschnitte, die zu zweiten Volumensegmenten gehören mit einer elektrisch nichtleitenden Substanz maskiert und das ferroelektrische Medium mit der zweiten Seitenfläche in eine leitfähige Flüssigkeit eingetaucht.

Grundsätzlich ist das erfindungsgemäße Verfahren geeignet, ein ferroelektrisches Medium mit genau zwei Volumensegmenten mit voneinander abweichender Orientierung der spontanen Polarisierung zu erzeugen. In diesem Fall wird lediglich eine Umpolung des ferroelektrischen Mediums in dem ersten Volumensegment bewirkt.

Strukturen für die Quasi-Phasenanpassung weisen jedoch überwiegend eine Vielzahl von Domänen bzw. Volumensegmenten auf, wobei abwechselnd Domänen mit voneinander verschiedener spontaner Polarisierung angeordnet sind. In einer Ausführungsform ist eine solche Anordnung der Volumensegmente periodisch, d.h. in Richtung eines durch das ferroelektrische Medium propagierenden Strahls von elektromagnetischer Strahlung haben die aufeinanderfolgenden Volumensegmente mit voneinander verschiedener spontaner Polarisierung die gleiche Länge in der Längenrichtung. Allerdings sind auch Ausführungsformen mit einer aperiodischen Anordnung einer Mehrzahl von ersten und zweiten Volumensegmenten möglich.

Daher weist in einer Ausführungsform das ferroelektrische Medium nach dem Ausführen des erfindungsgemäßen Verfahrens eine Mehrzahl von ersten Volumensegmenten und eine Mehrzahl von zweiten Volumensegmenten auf, wobei die ersten und zweiten Volumensegmente in Strahlrichtung einander abwechseln. Es versteht sich, dass zum Herstellen eines gepolten ferroelektrischen Mediums mit einer Mehrzahl von ersten und einer Mehrzahl von zweiten Volumensegmenten die Mehrzahl von ersten Volumensegmenten mit den im unabhängigen Anspruch definierten Schritte auszubilden bzw. zu schreiben ist.

In einer Ausführungsform der Erfindung ist die zweite Kontaktfläche kleiner als der zweite Seitenflächenabschnitt, wobei das Verfahren den zusätzlichen Schritt aufweist: Ausführen einer Relativbewegung zwischen der zweiten Kontaktfläche und dem ferroelektrischen Medium, so dass die zweite Kontaktfläche den zweiten Seitenflächenabschnitt überstreicht. In einer solchen Ausführungsform werden der erste und der zweite Seitenflächenabschnitt, welche das erste Volumensegment auf den gegenüberliegenden ersten und zweiten Seitenflächen begrenzen, seriell geschrieben.

In einer Ausführungsform kann die zweite Kontaktfläche eine Länge in Strahlrichtung aufweisen, die gleich der Länge des herzustellenden ersten Volumensegments ist, so dass die zweite Kontaktfläche nur über die Breite des ferroelektrischen Mediums bewegt werden muss. Gleichzeitig ist in einer Ausführungsform der Erfindung die erste Kontaktfläche deutlich kleiner als die zweite Kontaktfläche, so dass die erste Kontaktfläche während einer Bewegung der zweiten Kontaktfläche über die Breite des ferroelektrischen Mediums seriell einen Flächenabschnitt Zeile für Zeile in Richtung der Länge des ferroelektrischen Mediums überstreichen muss.

In einer Ausführungsform der Erfindung sind der erste Seitenflächenabschnitt und der zweite Seitenflächenabschnitt im Wesentlichen gleich groß und vorzugsweise kongruent zueinander. Eine solche Ausgestaltung des oder der ersten Volumensegmente weist den Vorteil auf, dass die Polungsstruktur über die Dicke des ferroelektrischen Mediums hinweg unveränderlich ist.

In einer Ausführungsform der Erfindung sind die erste Kontaktfläche und die zweite Kontaktfläche im Wesentlichen gleich groß. Dies erhöht die Homogenität der Feldlinien zwischen der ersten und der zweiten Kontaktfläche.

In einer weiteren Ausführungsform der Erfindung sind die erste Kontaktfläche und die zweite Kontaktfläche derart ausgerichtet, dass sie eine gemeinsame zu der ersten Seitenfläche senkrechte Achse schneiden. Umgangssprachlich sind damit die ersten und die zweite Kontaktfläche übereinander oder gegenüberliegend angeordnet.

In einer Ausführungsform der Erfindung erfahren die erste Kontaktfläche und die zweite Kontaktfläche zueinander spiegelbildliche Relativbewegungen gegenüber dem Kristall.

In einer solchen Ausführungsform werden der erste und der zweite Seitenflächenabschnitt gleichzeitig und im Wesentlichen auf gleichen Pfaden von der ersten Kontaktfläche und der zweiten Kontaktfläche überstrichen, wobei die erste und die zweite Kontaktfläche zu jedem Zeitpunkt einander unmittelbar gegenüberliegen, so dass das elektrische Feld, welches das ferroelektrische Medium durchsetzt, möglichst homogen ist.

Ein solches zeitgleiches Überstreichen der ersten und zweiten Seitenflächenabschnitte mit den ersten und zweiten Kontaktflächen wird in einer Ausführungsform dadurch erreicht, dass die Relativbewegungen der ersten Kontaktfläche und der zweiten Kontaktfläche gegenüber dem ferroelektrischen Medium durch ein Bewegen des ferroelektrischen Mediums gegenüber den ortsfest angeordneten ersten und zweiten Kontaktflächen bewirkt werden.

In einer Ausführungsform der Erfindung ist der erste elektrische Kontakt von einem ersten nadelförmigen Element gebildet. Es versteht sich, dass in einer Ausführungsform auch der zweite elektrische Kontakt von einem zweiten nadelförmigen Element gebildet ist.

In einer Ausführungsform der Erfindung handelt es sich bei dem ersten und/oder zweiten nadelförmigen Element um eine Nadel aus einem Hartmetall.

In einer Ausführungsform ist darauf zu achten, dass die nadelförmigen Elemente möglichst glatte Kontaktflächen ausbilden.

In einer Ausführungsform der Erfindung wird der erste elektrische Kontakt während dem Ausführen der Relativbewegung gegenüber dem ferroelektrischen Medium in eine Schwingungsbewegung versetzt, so dass die erste Kontaktfläche zumindest in der Ebene der ersten Seitenfläche oder senkrecht zu der Ebene der ersten Seitenfläche schwingt. Eine solche Schwingungsbewegung reduziert die Haftreibung zwischen dem elektrischen Kontakt und der Seitenfläche des ferroelektrischen Mediums während dem Überstreichen des ersten Seitenflächenabschnitts.

In einer Ausführungsform der Erfindung wird auch der zweite elektrische Kontakt während dem Ausführen der Relativbewegung gegenüber dem ferroelektrischen Medium in eine Schwingungsbewegung versetzt, so dass die zweite Kontaktfläche zumindest in der Ebene der zweiten Seitenfläche oder senkrecht zu der Ebene der zweiten Seitenfläche schwingt.

In einer Ausführungsform, bei welcher gleichzeitig eine Relativbewegung zwischen dem Kristall und der ersten Kontaktfläche sowie zwischen dem Kristall und der zweiten Kontaktfläche ausgeführt wird, ist es für die Präzision der Gestaltung des oder der ersten Volumensegmente in Richtung der Dicke des ferroelektrischen Mediums relevant, wie gut der erste elektrische Kontakt und der zweite elektrische Kontakt zueinander in Bezug auf eine Achse senkrecht zu der ersten und/oder zweiten Seitenflächenabschnitts ausgerichtet sind. Dies gilt insbesondere dann, wenn die Kontaktflächen Teil eines elektrischen Kontakts in Form eines nadelförmigen Elements sind.

Daher werden in einer Ausführungsform, in der der erste elektrische Kontakt von einem ersten nadelförmigen Element und der zweite elektrische von einem zweiten nadelförmigen Element gebildet sind, vor dem Ausführen der Relativbewegung der ersten Kontaktfläche und der zweiten Kontaktfläche gegenüber dem ferroelektrischen Medium das erste nadelförmige Element und das zweite nadelförmige Element zueinander justiert.

Dabei umfasst in einer Ausführungsform das Justieren: Betrachten des ersten nadelförmigen Elements und des zweiten nadelförmigen Elements aus einer ersten Beobachtungsrichtung, Einstellen einer Position des ersten nadelförmigen Elements und des zweiten nadelförmigen Elements relativ zueinander, so dass das erste nadelförmige Element und das zweite nadelförmige Element aus der ersten Beobachtungsrichtung gesehen auf einer zu der ersten Seitenfläche senkrechten Achse liegen, und betrachten des ersten nadelförmigen Elements und des zweiten nadelförmigen Elements aus einer zweiten Beobachtungsrichtung und Einstellen einer Position des ersten nadelförmigen Elements und des zweiten nadelförmigen Elements relativ zueinander, so dass das erste nadelförmige Element und das zweite nadelförmige Element aus der zweiten Beobachtungsrichtung gesehen auf einer zu der ersten Seitenfläche senkrechten Achse liegen.

In einer zusätzlichen oder alternativen Ausführungsform umfasst das Justieren die Schritte: Messen einer von dem ersten nadelförmigen Element und dem zweiten nadelförmigen Element gebildeten elektrischen Kapazität und Einstellen der Position des ersten nadelförmigen Elements und des zweiten nadelförmigen Elements in einer Ebene parallel zu der ersten Seitenfläche relativ zueinander, so dass die elektrische Kapazität maximal ist.

Bei einer Auswahl von ferroelektrischen Medien ist ein dauerhaftes kalligraphisches Polen insbesondere dann möglich, wenn der Kristall auf eine Temperatur über der Raumtemperatur (21 °C), vorzugsweise auf eine Temperatur von 100 °C oder mehr, aufgeheizt wird. Daher wird in einer Ausführungsform der Erfindung das ferroelektrische Medium vor dem Anlegen der elektrischen Spannung auf eine vorbestimmte Temperatur geheizt.

In einer Ausführungsform der Erfindung kann das Aufheizen des ferroelektrischen Mediums mit Hilfe einer elektromagnetischen Strahlungsquelle, beispielsweise mit einer IR-Lampe oder in einem Mikrowellenofen, eines Wärmebads oder auch einer kontaktgekoppelten Heizplatte erfolgen.

In einer Ausführungsform der Erfindung wird das ferroelektrische Medium vor dem Anlegen der elektrischen Spannung und dem Ausführen der Relativbewegung in ein Ölbad, vorzugsweise ein Bad aus Silikonöl, eingebracht. Ein solches Ölbad verhindert das Ausbilden von elektrischen Überschlägen zwischen den ersten und zweiten elektrischen Kontakten. In einer Ausführungsform der Erfindung wird das Ölbad auf eine vorgegebene Temperatur, vorzugsweise auf 100 °C oder mehr, erwärmt, um wiederum das ferroelektrische Medium vor und beim Polen zu erwärmen.

Die zuvor genannte Aufgabe wird ferner auch durch eine Vorrichtung zum Polen eines ferroelektrischen Mediums gemäß dem beigefügten, darauf gerichteten unabhängigen Anspruch gelöst. Dazu weist die Vorrichtung zum Polen eines ferroelektrischen Mediums der eingangs genannten Art eine zweite Kontaktfläche auf, die kleiner ist als eine maximale erste Seitenfläche des in dem Halter aufnehmbaren ferroelektrischen Mediums.

Soweit im Folgenden Aspekte der Erfindung im Hinblick auf die Vorrichtung zum Polen eines ferroelektrischen Mediums beschrieben werden, so gelten diese auch für das entsprechende Verfahren zum Polen eines ferroelektrischen Mediums und umgekehrt. Soweit das Verfahren mit einer Vorrichtung gemäß dieser Erfindung ausgeführt wird, so weist diese die entsprechenden Einrichtungen hierfür auf. Insbesondere sind Ausführungsformen der Vorrichtung zum Ausführen der zuvor beschriebenen Ausführungsformen des Verfahrens geeignet.

In einer Ausführungsform der Erfindung ist der Aktor derart ausgestaltet und angeordnet, dass der Aktor in dem Betrieb der Vorrichtung eine Relativbewegung zwischen der zweiten Kontaktfläche und dem Halter bewirkt.

In einer Ausführungsform der Erfindung ist in der Vorrichtung ein ferroelektrisches Medium aufgenommen. Dabei ist die zweite Kontaktfläche so groß wie der zweite Seitenflächenabschnitt, welcher das erste Volumensegment definiert.

Weitere Vorteile, Merkmale und Anwendungsmöglichkeiten der vorliegenden Erfindung werden anhand der vorliegenden Beschreibung von Ausführungsformen und der zugehörigen Figuren deutlich. In den Figuren sind gleiche Elemente mit gleichen Bezugszeichen bezeichnet.
- Figur 1: ist eine schematische, weggebrochene Seitenansicht einer ersten Ausführungsform einer erfindungsgemäßen Vorrichtung zum Polen eines nichtlinear optischen Kristalls mit einem in der Vorrichtung aufgenommenen Kristall.
- Figur 2: ist eine schematische, weggebrochene Seitenansicht einer zweiten Ausführungsform einer erfindungsgemäßen Vorrichtung zum Polen eines nichtlinear optischen Kristalls mit einem in der Vorrichtung aufgenommenen Kristall.
- Figur 3: ist eine schematische, weggebrochene Seitenansicht einer dritten Ausführungsform einer erfindungsgemäßen Vorrichtung zum Polen eines nichtlinear optischen Kristalls mit einem in der Vorrichtung aufgenommenen Kristall.
- Figur 4: ist eine schematische Draufsicht eines mit der Vorrichtung aus Figur 3 gepolten nichtlinear optischen Kristalls.

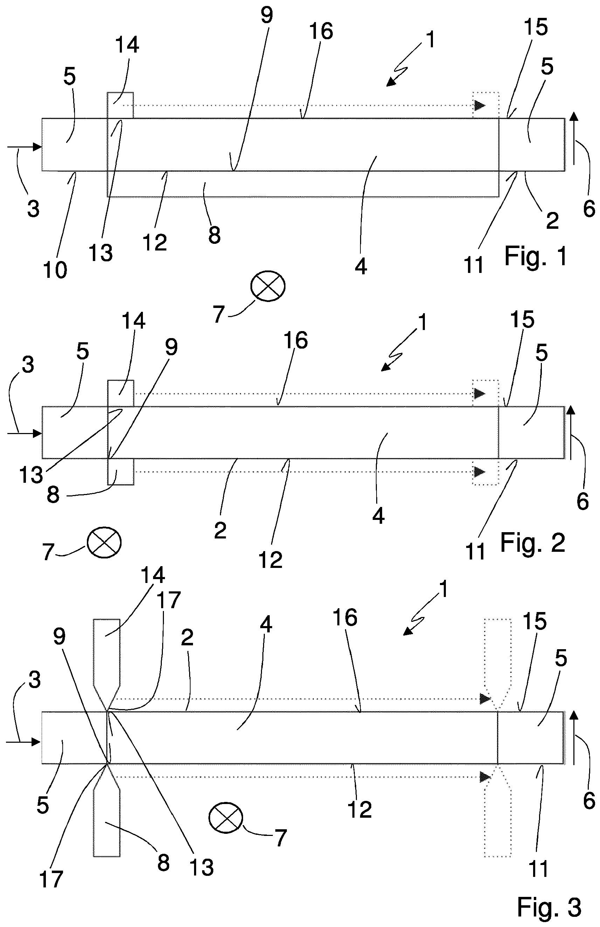

Die Figuren 1 bis 3 zeigen jeweils eine schematische Seitenansicht einer Vorrichtung 1 zum Polen eines ferroelektrischen Mediums in Form eines nichtlinear optischen, ferroelektrischen Kristalls 2. Jede der Darstellungen der Figuren 1 bis 3 zeigt eine Draufsicht von der Seite auf die Längserstreckung des Kristalls 2. Die elektromagnetische Strahlung würde von links nach rechts oder umgekehrt durch den Kristall propagieren, wenn der gepolte Kristall in einem nichtlinear optischen Prozess eingesetzt wird.

Von dem Kristall 2 sind jeweils ein erstes Volumensegment bzw. eine erste Domäne 4 und zwei zweite Volumensegmente bzw. Domänen 5 dargestellt. Dabei sind die erste Domäne 4 in Längsrichtung vollständig und die zwei zweiten Domänen 5 weggebrochen, d.h. nur teilweise, gezeigt.

Im Sinne der vorliegenden Anmeldung wird als Dicke des Kristalls seine Erstreckung in der mit dem Bezugszeichen 6 bezeichneten Dickenrichtung benannt. Demgegenüber ist die Länge des Kristalls gemessen in der Längenrichtung 3. Auch die Strahlachse der elektromagnetischen Strahlung bei der Verwendung des Kristalls 2 erstreckt sich in der Längenrichtung 3.

Jeder der Kristalle 2 weist eine erste Seitenfläche 15 und eine zweite Seitenfläche 11 auf. Jede erste Domäne 4 wird auf der ersten Seitenfläche 15 von einem ersten Seitenflächenabschnitt 16 begrenzt. Auf der zweiten Seitenfläche 11 wird jede erste Domäne 4 von einem zweiten Seitenflächenabschnitt 12 begrenzt. Mit anderen Worten ausgedrückt begrenzen die ersten und zweiten Seitenflächenabschnitte 16, 12 das Volumen der ersten Domänen 4 in der Längenrichtung 3 und der Breitenrichtung 7.

Zum Polen wird zwischen einem ersten Kontakt 14 mit einer ersten Kontaktfläche 13 innerhalb des ersten Seitenflächenabschnitts 16 und einem zweiten Kontakt 8 mit einer zweiten Kontaktfläche 9 innerhalb des zweiten Seitenflächenabschnitts 12 auf der zweiten Seitenfläche 11 eine elektrische Spannung angelegt, um die spontane Polarisierung des Kristalls innerhalb der ersten Domänen 4 dauerhaft anders auszurichten als die ursprüngliche spontane Polarisierung des Kristalls 2 (diese bleibt in den zweiten Domänen 5 erhalten). In den gezeigten Ausführungsformen sind nach dem Polen bzw. Umpolen der ersten Domänen 4 die spontane Polarisierung des Kristalls 2 in den ersten Domänen 4 und die spontane Polarisierung in den zweiten Domänen 5 einander entgegengesetzt.

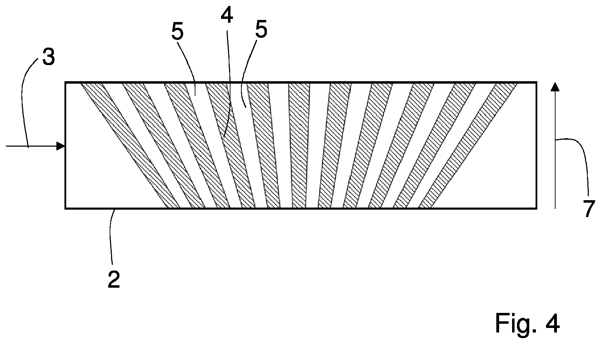

Jeder der Kristalle 2 weist eine periodische Polungsstruktur auf, d. h. erste und zweite Domänen 4, 5 wiederholen sich regelmäßig. Dabei haben an einer Position in der Breitenrichtung 7 des Kristalls 2 alle ersten und zweiten Domänen 4, 5 die gleiche Länge. Gut ist dies in der Figur 4 zu erkennen, welche eine Draufsicht von oben auf den Kristall 2 aus Figur 3 ist.

Figur 4 zeigt eine mögliche komplexe Polungsstruktur des Kristalls 2, welche sich mithilfe des Verfahrens und der Vorrichtung erzeugen lässt. In der Ausführungsform der Figuren 3 und 4 hat der fertig gepolte Kristall 2 eine periodische Polungsstruktur mit abwechselnd angeordneten ersten und zweiten Domänen 4, 5, wobei die Periodizität der Polungsstruktur in der Breitenrichtung 7 des Kristalls 2 variiert.

Es ist die grundlegende Idee des Verfahrens und der Vorrichtung der vorliegenden Erfindung, auch Kristalle mit einer Dicke in der Dickenrichtung 6 von mehr als 500 µm so polen zu können, dass sich beim Domänenwachstum auch über die gesamte Dicke des Kristalls 2 hinweg nicht die ursprüngliche spontane Polarisierung durchsetzt.

Dies wird in allen Ausführungsformen der Figuren 1 bis 4 dadurch gewährleistet, dass der zweite Kontakt 8 eine zweite Kontaktfläche 9 aufweist, die kleiner ist als die Gesamtfläche der zweiten Seitenfläche 11. Dabei ist die Kontaktfläche 9 maximal genau so groß wie der zweite Seitenflächenabschnitt 12, welcher die erste Domäne 4 auf der zweiten Seitenfläche 11 begrenzt. Auf diese Weise erstrecken sich die Feldlinien des elektrischen Feldes in der Längenrichtung 3 des Kristalls 2 definiert und abgegrenzt zwischen der ersten Kontaktfläche 13 des ersten Kontakts 14 und der zweiten Kontaktfläche 9 des zweiten Kontakts 8.

In der Ausführungsform aus Figur 1 bedeckt die zweite Kontaktfläche 9 des zweiten Kontakts 8 den zweiten Seitenflächenabschnitt 12 der ersten Domänen 4 auf der zweiten Seitenfläche 11 vollständig. In dieser Ausführungsform wird dann nur der erste Kontakt 14 mit der ersten Kontaktfläche 13 relativ gegenüber dem Kristall 2 bewegt, um die Änderung der spontanen Polarisierung über das gesamte Volumen der ersten Domänen 4 hinweg zu bewirken.

In der Ausführungsform der Figur 1 ist die erste Kontaktfläche 13 in etwa quadratisch, sodass der erste Kontakt 14 zum vollständigen Schreiben der jeweiligen ersten Domänen 4 sowohl in der Längenrichtung 3 als auch in der dazu senkrechten Breitenrichtung 7 den ersten Seitenflächenabschnitts 16 überstreichen muss.

Eine solche Ausführungsform wie in Figur 1 bewirkt zunächst einmal nur eine hinreichende Bündelung der elektrischen Feldlinien beim Polen in der Längenrichtung 3 und in der Breitenrichtung 7, sodass die ersten Domänen 4 in der Dickenrichtung 6 eine vollständige und an den Rändern sauber abgegrenzte Umorientierung der spontanen Polarisierung erfahren.

Demgegenüber ist in Figur 2 die zweite Kontaktfläche 9 des zweiten Kontakts 8 deutlich kleiner als der zweite Seitenflächenabschnitt 12. Die erste Kontaktfläche 13 und die zweite Kontaktfläche 9 sind in etwa gleich groß und kongruent zueinander. Beim Umpolen überstreichen die erste Kontaktfläche 13 und die zweite Kontaktfläche 9 die ersten bzw. zweiten Seitenflächenabschnitte 16, 12 synchron und spiegelbildlich, sodass sich die ersten und zweiten Kontaktflächen 13, 9 immer gegenüberliegen. Es versteht sich, dass in einer solchen Ausführungsform sowohl der erste als auch der zweite Kontakt 14, 8 zum vollständigen Überstreichen der ersten und zweiten Seitenflächenabschnitte 16, 12 eine Relativbewegung gegenüber dem Kristall 2 in der Längenrichtung 3 und der Breitenrichtung 7 ausführen müssen. Eine solche Ausführungsform erlaubt es, komplexe Polungsstrukturen, wie sie beispielsweise anhand der Figur 4 beschrieben sind, "zu schreiben", ohne dass zweite Kontakte oder Elektroden mit einer gesondert angefertigten Form ihrer Kontaktfläche auf die zweiten Seitenflächenabschnitte 12 aufgebracht werden müssten.

Das Konzept aus Figur 3 modifiziert die Variante aus Figur 2 dahingehend, dass in dieser Ausführungsform der erste Kontakt 14 und der zweite Kontakt 8 Hartmetallnadeln sind, deren Spitzen 17 die ersten und zweiten Seitenflächenabschnitte 16, 12 während des Schreibens mit ihren ersten und zweiten Kontaktflächen 13, 9 überstreichen.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Vorrichtung
- 2: ferroelektrisches Medium bzw. Kristall
- 3: Längenrichtung
- 4: erste Domäne
- 5: zweite Domäne
- 6: Dickenrichtung
- 7: Breitenrichtung
- 8: zweiter Kontakt
- 9: zweite Kontaktfläche
- 11: zweite Seitenfläche
- 12: zweiter Seitenflächenabschnitt
- 13: erste Kontaktfläche
- 14: erster Kontakt
- 15: erste Seitenfläche
- 16: erster Seitenflächenabschnitt
- 17: Spitze

## Patentansprüche

1. Verfahren zum Polen eines ferroelektrischen Mediums (2) mit einer ersten Seitenfläche (15) und einer der ersten Seitenfläche (15) gegenüberliegend angeordneten zweiten Seitenfläche (11),
so dass das ferroelektrische Medium (2) ein erstes Volumensegment (4) und ein zweites Volumensegment (5) aufweist,
wobei die spontane Polarisierung des ferroelektrischen Mediums (2) in dem ersten Volumensegment (4) eine erste Orientierung und in dem zweiten Volumensegment (5) eine zweite Orientierung aufweist,
wobei die erste Orientierung und die zweite Orientierung voneinander verschieden sind und
wobei das erste Volumensegment (4) durch einen ersten Seitenflächenabschnitt (16) der ersten Seitenfläche (15) und einen zweiten Seitenflächenabschnitt (12) der zweiten Seitenfläche (11) definiert ist, und
wobei das Verfahren die Schritte aufweist
Bereitstellen des ferroelektrischen Mediums (2),
Aufbringen einer ersten Kontaktfläche (13) eines ersten elektrischen Kontakts (14) auf den ersten Seitenflächenabschnitt (16),
wobei die erste Kontaktfläche (13) kleiner ist als der erste Seitenflächenabschnitt (16),
Aufbringen einer zweiten Kontaktfläche (9) eines zweiten elektrischen Kontakts (8) auf den zweiten Seitenflächenabschnitt (12),
Anlegen einer elektrischen Spannung zwischen dem ersten elektrischen Kontakt (14) und dem zweiten elektrischen Kontakt (8) und
Ausführen einer Relativbewegung zwischen der ersten Kontaktfläche (13) und dem ferroelektrischen Medium (2), so dass die erste Kontaktfläche (13) den ersten Seitenflächenabschnitt (16) überstreicht,
**dadurch gekennzeichnet, dass**
die zweite Kontaktfläche (9) höchstens so groß ist wie der zweite Seitenflächenabschnitt (12).

2. Verfahren nach dem vorhergehenden Anspruch, wobei die zweite Kontaktfläche (9) kleiner ist als der zweite Seitenflächenabschnitt (12) und wobei das Verfahren den Schritt aufweist: Ausführen einer Relativbewegung zwischen der zweiten Kontaktfläche (9) und dem ferroelektrischen Medium (2), so dass die zweite Kontaktfläche (9) den zweiten Seitenflächenabschnitt (12) überstreicht.

3. Verfahren nach einem der vorhergehenden Ansprüche, wobei der erste Seitenflächenabschnitt (16) und der zweite Seitenflächenabschnitt (12) im Wesentlichen gleich groß und vorzugsweise kongruent zueinander sind.

4. Verfahren nach einem der vorhergehenden Ansprüche soweit von Anspruch 2 abhängig, wobei die erste Kontaktfläche (13) und die zweite Kontaktfläche (9) im Wesentlichen gleich groß und vorzugsweise kongruent zueinander sind.

5. Verfahren nach dem vorhergehenden Anspruch, wobei die erste Kontaktfläche (13) und die zweite Kontaktfläche (9) derart ausgerichtet sind, dass sie eine gemeinsame zu der ersten Seitenfläche (15) senkrechte Achse (6) schneiden.

6. Verfahren nach dem vorhergehenden Anspruch, wobei die erste Kontaktfläche (13) und die zweite Kontaktfläche (9) zueinander spiegelbildliche Relativbewegungen gegenüber dem ferroelektrischen Medium (2) erfahren.

7. Verfahren nach Anspruch 5 oder 6, wobei die Relativbewegungen der ersten Kontaktfläche (13) und der zweiten Kontaktfläche (9) gegenüber dem ferroelektrischen Medium (2) durch ein Bewegen des ferroelektrischen Mediums (2) gegenüber den ortsfest angeordneten ersten und zweiten Kontaktflächen (13, 9) bewirkt werden.

8. Verfahren nach einem der vorhergehenden Ansprüche, wobei der erste elektrische Kontakt (14) von einem ersten nadelförmigen Element gebildet ist.

9. Verfahren nach einem der vorhergehenden Ansprüche, wobei der erste elektrische Kontakt (14) während dem Ausführen der Relativbewegung gegenüber dem ferroelektrischen Medium (2) in eine Schwingungsbewegung versetzt wird, so dass die erste Kontaktfläche (13) zumindest in der Ebene der ersten Seitenfläche (15) oder senkrecht zu der Ebene der ersten Seitenfläche (15) schwingt.

10. Verfahren nach einem der Ansprüche 2 bis 9, wobei der erste elektrische Kontakt (14) von einem ersten nadelförmigen Element gebildet ist und der zweite elektrische Kontakt von einem zweiten nadelförmigen Element gebildet ist, wobei vor dem Ausführen der Relativbewegungen der ersten Kontaktfläche (13) und der zweiten Kontaktfläche (9) gegenüber dem ferroelektrischen Medium (2) das erste nadelförmige Element und das zweite nadelförmige Element zueinander justiert werden, wobei das Justieren die Schritte umfasst
Betrachten des ersten nadelförmigen Elements und des zweiten nadelförmigen Elements aus einer ersten Beobachtungsrichtung,
Einstellen einer Position des ersten nadelförmigen Elements und des zweiten nadelförmigen Elements relativ zueinander, so dass das erste nadelförmige Element und das zweite nadelförmige Element aus der ersten Beobachtungsrichtung gesehen auf einer zu der ersten Seitenfläche (15) senkrechten Achse (6) liegen, und Betrachten des ersten nadelförmigen Elements und des zweiten nadelförmigen Elements aus einer zweiten Beobachtungsrichtung und
Einstellen einer Position des ersten nadelförmigen Elements und des zweiten nadelförmigen Elements relativ zueinander, so dass das erste nadelförmige Element und das zweite nadelförmige Element aus der zweiten Beobachtungsrichtung gesehen auf einer zu der ersten Seitenfläche (15) senkrechten Achse (6) liegen.

11. Verfahren nach einem der Ansprüche 2 bis 10, wobei der erste elektrische Kontakt (14) von einem ersten nadelförmigen Element gebildet ist und der zweite elektrische Kontakt (8) von einem zweiten nadelförmigen Element gebildet ist, wobei vor dem Ausführen der Relativbewegungen der ersten Kontaktfläche (13) und der zweiten Kontaktfläche (9) gegenüber dem ferroelektrischen Medium (2) das erste nadelförmige Element und das zweite nadelförmige Element zueinander justiert werden, wobei das Justieren die Schritte umfasst
Messen einer von dem ersten nadelförmigen Element und dem zweiten nadelförmigen Element gebildeten elektrischen Kapazität und
Einstellen der Position des ersten nadelförmigen Elements und des zweiten nadelförmigen Elements jeweils in einer Ebene parallel zu der ersten Seitenfläche (15) relativ zueinander, so dass die elektrische Kapazität maximal ist.

12. Verfahren nach einem der vorhergehenden Ansprüche, wobei das ferroelektrischen Medium (2) vor dem Anlegen der elektrischen Spannung auf eine vorbestimmte Temperatur geheizt wird.

13. Verfahren nach einem der vorhergehenden Ansprüche, wobei das ferroelektrische Medium (2) vor dem Anlegen der elektrischen Spannung und dem Ausführen der Relativbewegung in ein Ölbad eingebracht wird.

14. Vorrichtung (1) zum Polen eines ferroelektrischen Mediums (2) mit einer ersten Seitenfläche (15) und einer der ersten Seitenfläche (15) gegenüberliegend angeordneten zweiten Seitenfläche (11), so dass das ferroelektrische Medium (2) ein erstes Volumensegment (4) und ein zweites Volumensegment (5) aufweist,
wobei die Vorrichtung (1) aufweist
einen Halter zum Aufnehmen des ferroelektrischen Mediums (2) in einem Betrieb der Vorrichtung (1),
einen ersten elektrischen Kontakt (14) mit einer ersten Kontaktfläche (13),
wobei der erste elektrische Kontakt (14) derart ausgestaltet und angeordnet ist, dass die erste Kontaktfläche (13) in dem Betrieb der Vorrichtung (1) auf einen ersten Seitenflächenabschnitt (16) der ersten Seitenfläche (15) des an dem Halter aufgenommenen ferroelektrischen Mediums (2) aufbringbar ist,
einen zweiten elektrischen Kontakt (8) mit einer zweiten Kontaktfläche (9), wobei der zweite elektrische Kontakt (8) derart ausgestaltet und angeordnet ist, dass die zweite Kontaktfläche (9) in dem Betrieb der Vorrichtung (1) auf einen zweiten Seitenflächenabschnitt (12) der zweiten Seitenfläche (11) des an dem Halter aufgenommenen ferroelektrischen Mediums (2) aufbringbar ist,
eine elektrische Spannungsquelle, wobei die Spannungsquelle derart mit dem ersten und dem zweiten elektrischen Kontakt (14, 8) verbunden ist, dass in dem Betrieb der Vorrichtung (1) eine elektrische Spannung zwischen den ersten und zweiten Kontaktflächen (13, 9) anlegbar ist,
einen Aktor, wobei der Aktor derart ausgestaltet und angeordnet ist, dass der Aktor in dem Betrieb der Vorrichtung (1) eine Relativbewegung zwischen der ersten Kontaktfläche (13) und dem Halter bewirkt, und
eine Steuerung,
wobei die Steuerung derart wirksam mit dem Aktor verbunden ist, dass in dem Betrieb der Vorrichtung (1) der Aktor ein Steuersignal von der Steuerung empfängt, und
wobei die Steuerung derart eingerichtet ist, dass die Steuerung in dem Betrieb der Vorrichtung (1) den Aktor derart steuert, dass die erste Kontaktfläche (13) den ersten Seitenflächenabschnitt (16) des an dem Halter aufgenommenen ferroelektrischen Mediums (2) überstreicht,
**dadurch gekennzeichnet, dass**
die zweite Kontaktfläche (9) kleiner ist als eine maximale erste Seitenfläche (15) des an dem Halter aufnehmbaren ferroelektrischen Mediums (2).

15. Vorrichtung (1) nach dem vorhergehenden Anspruch, wobei der Aktor derart ausgestaltet und angeordnet ist, dass der Aktor in dem Betrieb der Vorrichtung (1) eine Relativbewegung zwischen der zweiten Kontaktfläche (9) und dem Halter bewirkt.
